# EUROPEAN PATENT SPECIFICATION

(11) **EP 2 176 614 B1**
(45) Date of publication and mention of the grant of the patent: **08.10.2014**
(21) Application number: 08773640.1
(22) Date of filing: 25.06.2008
(51) Int. Cl.: F27B 15/10, F27B 7/36, C21B 13/00, C21B 11/06

(54) **PROCESS AND PLANT FOR REDUCING SOLIDS CONTAINING IRON OXIDE**
VERFAHREN UND ANLAGE ZUR REDUZIERUNG VON EISENOXIDHALTIGEN FESTSTOFFEN
PROCÉDÉ ET INSTALLATION POUR RÉDUIRE DES MATIÈRES SOLIDES CONTENANT DE L'OXYDE DE FER

(30) Priority: 10.07.2007 DE 102007032419
(43) Date of publication of application: 21.04.2010
(73) Proprietor: Outotec Oyj, 02230 Espoo (FI)
(72) Inventor: FORMANEK, Lothar, 60529 Frankfurt am Main (DE); HEIN, Jean-Claude, 61194 Niddatal (DE)
(74) Representative: Keil & Schaafhausen Patent- und Rechtsanwälte
(86) International application number: PCT/EP2008/005133
(87) International publication number: WO 2009/007007

(56) References cited:
- WO-A-2004/057039
- JP-A- 11 209 811
- JP-A- 57 188 607
- US-A- 3 562 780
- US-A- 5 403 379

## Description

The present invention relates to the reduction of solids containing iron oxide, in particular titanium-containing ores, such as ilmenite, wherein the solids are introduced into a reactor in which they are reduced in the presence of a carbonaceous reducing agent at a temperature of 800 to 1200°C.

The reduction of solids containing iron oxide conventionally is effected in rotary kilns or fluidized-bed reactors by means of carbonaceous reducing agents, such as e.g. coal. From U.S. patent 5,403,379, for instance, a process for the treatment of titanium-containing ores is known, in which the titanium-containing ore, in particular ilmenite (FeTiO₃) is introduced into a rotary kiln together with carbonaceous material, in particular coal. The reduction of the iron oxide chiefly is effected by means of carbon monoxide (CO), which is formed in the rotary kiln at elevated temperatures of about 950°C according to the Boudouard reaction

CO₂ + C → 2CO.

By means of the CO obtained from the coal, the ilmenite is reduced to TiO₂ (rutile) and metallic iron corresponding to the equation

FeTiO₃ + CO → TiO₂ + Fe + CO₂

wherein the CO is oxidized to CO₂. The reduction of titanium-containing ores requires very strong reduction conditions, i.e. a high ratio of CO:CO₂. This preferably requires coals which have a high reactivity with respect to CO₂, in order to ensure that a sufficient quantity of CO and a gas with a high ratio of CO:CO₂ is generated by the Boudouard reaction.

It is also known that in the reduction of iron oxides with hydrogen (H₂) the chemical reactions proceed faster as compared to the reduction with CO at the same temperature and the same pressure. In addition, when using H₂ as reduction gas, the formation of metallic iron already is effected at temperatures from about 500°C. In the conventional reduction with coal, the reduction gases CO and H₂ required for reduction are generated on the one hand as described above according to the Boudouard reaction and on the other hand by the carbon-steam gasification reaction

H₂O+C→H₂+CO.

The amount of H₂ produced depends on the release of H₂ by the coal or carbonaceous material introduced into the reactor and on the water content of the introduced solids. At the same time, the amount of reduction effected by the hydrogen is determined thereby. The water content of the solids is of secondary importance for the reduction, because the most part thereof has already been expelled in the temperature range in which reduction takes place and no longer is available for a reaction.

From WO 2006/076801 A1, there is known a process for steam reforming of a carbonaceous material, in particular waste, into a synthesis gas, in which the carbonaceous material is converted to a synthesis gas, which substantially consists of hydrogen and carbon monoxide, in a rotary kiln at temperatures of 650 to 1100°C. In contrast to the combustion, steam reforming is an endothermal process, in which the carbonaceous material is heated together with water, whereby the reaction for producing the synthesis gas is effected. The synthesis gas is withdrawn from the process as product, whereas the carbonaceous solids are separated from the solid material and are reused.

From U.S. patent 6,698,365 there is known an apparatus for the thermal treatment of wastes with superheated steam, in which the wastes are introduced into a first rotary kiln, in which they are dried by means of superheated steam. Subsequently, the solids are introduced into a second rotary kiln, in which the solids in turn are carbonized by means of superheated steam.

JP 57 188 607 A discloses a method and a plant for simultaneously reducing iron and fuel gas. Iron ore, coke and a reducing gas are fed into a reducing reaction tower with a fluidized bed, while a second reaction tower acts as a combustion reaction tower. The second reactor is supplied with coke, oxygen and steam. Produced gases of both reactors are discharged via a shared discharge opening. In the combustion reaction tower, carbon material is burned, thereby forming heat-medium particles made of the carbon material. Both reactors are linked to each other via communication pipes for circulating these carbon particles between the two reactors. The thus-heated coal and coke particles are fluidized in the combustion reactor and transferred into the reduction reactor tower to supply a certain amount of heat. Thereafter, the heat-medium particles are returned back into the combustion reaction tower. The reduced iron particles generated after the reduction reaction are discharged from a lower discharge port.

JP 11 209 811 A describes a fluidized bed furnace for producing iron carbide having a low reaction activity. Reaction gas is fed to the raw material in the fluidized bed and the generated iron carbide is discharged. To ensure a constant and complete reaction process, water or reaction gas with low temperature can be additionally introduced.

WO 2004/057039 discloses a method and a plant for the heat treatment of solids containing iron oxide in a fluidized bed reactor. To improve the utilization of energy, it is proposed to introduce a first gas or gas mixture from below through at least one gas supply tube into a mixing chamber region of the reactor, the gas supply tube being at least partly surrounded by a stationary annular fluidized bed which is fluidized by supplying fluidizing gas. The gas velocities of the first gas or gas mixture and of the fluidizing gas for the annular fluidized bed are adjusted such that the Particle-Froude-Numbers in the gas supply tube are between 1 and 100, in the annular fluidized bed 12 between 0.02 and 2, and in the mixing chamber 15 between 0.3 and 30. Further energy carrier can be supplied via line and central tube, but no reducing agent is added.

US 5,403,379 discloses a process for treating titaniferous material with a solid carbonaceous material in a kiln. After the heat treatment, the reduced titaniferous material and the formed char are removed from the kiln and separated from each other in a dry separation stage. The recovered char is recycled to the kiln by blowing the char entrained in a fluid stream so that the blown char burns in the kiln. No further reduction components are added to the kiln.

It is the object of the invention to make the reduction of solids containing iron oxide more efficient.

This object substantially is solved with the features of claim 1. According to the invention, steam is introduced into the reactor. By injecting additional steam, hydrogen already is formed at temperatures from about 400°C by the carbon-steam gasification reaction. This hydrogen additionally is available for the reduction of the ores containing iron oxide, wherein this reduction proceeds much faster than the reduction with CO and starts already at lower temperatures. As a result, the required retention time in the reduction reactor is reduced, which provides for a higher throughput capacity with the same furnace size. In addition, product quality is improved by the faster reduction, as a higher degree of metallization is achieved.

As feedstock, all ores, ore concentrates and waste materials reducible with CO and/or H₂ can be used, e.g. nickel ore, zinc oxide wastes. Preferably, iron-containing fine-grained materials are used. These can be pretreated, e.g. preoxidized, prereduced or processed, e.g. sintered, ores. In particular, ores or ore mixtures containing titanium or iron oxide are preferred, e.g. ilmenite or oxidized ilmenite Fe₂O₃*2TiO₂. Typically the feedstock can be lump ore or pellets at a grain size below 25 mm, preferred below 18 mm, or micro pellets below 6 mm, preferred 2- 4 mm or ore concentrates. It is preferred, that the concentrates are fine grained. Preferably they have a grain size below 6 mm, more preferably below 1 mm. If the ore is ilmenite, grain sizes below 400 µm and d₅₀ of about 100 - 250 mm are preferred.

In accordance with the invention, the steam is introduced in the reactor with a pressure of 0 to 5 bar, preferably 1 to 2 bar above the internal pressure of the reactor. In particular an absolute pressure of 2 to 3 bar is preferred, when the reactor is operated at atmospheric pressure. For this purpose, steam from a steam system is particularly useful. There can be utilized low-pressure steam, e.g. after the turbine of a power generation. In many cases, the steam is generated in the waste heat utilization of the process. By additionally introducing steam, the reduction temperature in the furnace of mostly 1000 to 1150°C can be decreased by about 50 to 150°C, so that the furnace in accordance with the invention can be operated at a temperature of about 900 to 1000°C.

As reducing agent, all substances which form hydrogen with steam can be used. Carbonaceous reducing agents are preferred, especially solid carbonaceous reducing agents, e.g. biomasses or products thereof (e.g. pyrolysis coke or charcoal) or coal and products thereof (such as low temperature carbonization products or coke). It is preferred, that the grain size of the reducing agent is below 40 mm, preferably below 20 mm, depending on the degradation of the reducing agent during the reaction. If finer carbonaceous reducing agents are needed, e.g. in fluidised beds, the preferred grain size is below 10 mm, more preferred below 6 mm.

In accordance with a preferred aspect of the invention, the steam is introduced into the reactor with a temperature of 100 to 150°C, preferably 120 to 140°C and in particular about 130°C. It is not necessary to use superheated steam, so that the additional energy costs are minimized. In many cases, the temperature of the steam supplied advantageously corresponds to the temperature of one gas or of the further gases supplied.

In accordance with the invention it is preferred, that the bulk of material, preferably mixed iron containing solids and solid carbonaceous reducing agent, is a moving

This invention also extends to a plant for reducing solids containing iron oxide with the features of claim 10, which is suitable for performing a process of the invention and includes a reactor, in which the solids containing iron oxide are reduced in the presence of a carbonaceous reducing agent at a temperature of 800 to 1200°C. In accordance with the invention, the reactor includes a steam supply conduit for introducing additional steam.

In a preferred development of the invention the reactor has a device for moving the solids inside of the reactor, e.g. a rotating reactor or a grid for the introduction of fluids into the reactor. bulk. It is preferred, that this moving bulk is caused by external forces, e.g. by stirrers, fluids or a rotating reactor. This movement also enforces mixing of the material, so that no individual layers of ore and solid carbonaceous reducing agent is inside the reactor. It is further preferred that this mixing of solids is done during the whole reaction until the solids leave the reactor.

In accordance with one aspect of the invention, the reactor is a rotary kiln, which is traversed by the solids in a bed of material. In accordance with the invention, the steam is introduced into the moving bed of material.

In accordance with a development of this invention, the steam is introduced into the bed of material at several points distributed along the length of the furnace.

However, if the reactor includes a stationary fluidized bed, the steam preferably can directly be injected into the fluidized bed.

In the case of a circulating fluidized bed, in which the solids introduced into the reactor are fluidized by supplying a fluidizing gas, the reduced solids are discharged from the reactor with the fluidizing gas and separated from the fluidizing gas in a separation unit, and the separated solids are at least partly recirculated to the reactor, the steam preferably is injected into the reduction reactor.

When using an annular fluidized bed, in which the reactor includes a gas supply tube, which in the lower region of the reactor extends vertically upwards into the turbulence mixing chamber and is surrounded by a stationary annular fluidized bed annularly formed around the gas supply tube, the steam is introduced into the gas supply tube in accordance with the invention.

In a fluidized-bed reactor, the steam can of course also be introduced into the reactor at several points or form part of a fluidizing gas.

If the reactor is a rotary kiln, the steam supply conduit opens into the bed of material in accordance with the invention, wherein preferably a plurality of steam supply conduits are provided, which are distributed along the length of the furnace.

In a circulating fluidized bed, the steam supply conduit opens into the reduction reactor in accordance with the invention, whereas in the case of a stationary fluidized bed it opens into the fluidized bed.

When using an annular fluidized bed, the steam supply conduit preferably opens into the gas supply tube. It is, however, also possible to introduce the steam into the stationary annular fluidized bed or laterally into the turbulence mixing chamber.

Further developments, advantages and possible applications can also be taken from the following description of embodiments and the drawing. All features described and/or illustrated per se or in any combination form the subject-matter of the invention, independent of their inclusion in the claims or their back-reference.

In the drawing:
- Fig. 1: schematically shows a plant for performing a process of the invention in accordance with a first embodiment by using a rotary kiln for reducing solids containing iron oxide,
- Fig. 2: shows a plant in accordance with a second embodiment of the present invention by using a stationary fluidized bed for reducing solids containing iron oxide,
- Fig. 3: shows a plant in accordance with a third embodiment of the present invention by using a circulating fluidized bed for reducing solids containing iron oxide, and
- Fig. 4: shows a plant in accordance with a fourth embodiment of the present invention by using an annular fluidized bed for reducing solids containing iron oxide.

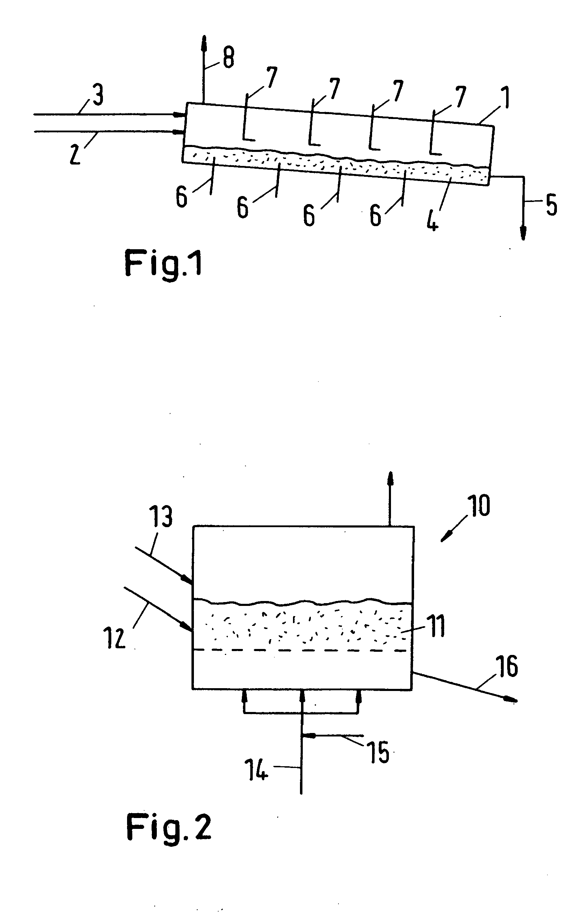

In the plant in accordance with the first embodiment of the present invention as shown in Fig. 1, a rotary kiln 1 is provided as reduction reactor, into which fine-grained solids containing iron oxide, in particular ilmenite, are introduced via a solids supply conduit 2. Via a supply conduit 3, a carbonaceous reducing agent, e.g. coal or precarbonized coal, is introduced into the rotary kiln 1. In the rotary kiln 1, the mixed solids and the reducing agent form a material bed 4, which slowly travels through the rotary kiln 1, and are withdrawn at its end via a discharge conduit 5. For a plurality, here three steam supply conduits 6 distributed along the length of the rotary kiln 1, steam is introduced into the rotary kiln 1 with a temperature of about 130°C. Via gas supply conduits 7, combustion air also is added at several points distributed along the length of the rotary kiln 1. As combustion air, there can be used ambient air, air enriched with oxygen, some other oxygen-containing gas or e.g. technical oxygen. The waste gas can be discharged via a discharge conduit 8.

In the second embodiment of the present invention as shown in Fig. 2, a reduction reactor 10 includes a stationary fluidized bed 11, to which fine-grained solids containing iron oxide, in particular ilmenite, are supplied via a solids supply conduit 12, and a suitable reducing agent, in particular coal, via a supply conduit 13. Via a gas supply conduit 14, a fluidizing gas, e.g. air, is supplied, in order to fluidize the solids in the stationary fluidized bed. A steam supply conduit 15 opens into the gas supply conduit 13, in order to supply additional steam to the fluidized bed 11 together with the fluidizing air. Alternatively, the steam can also laterally be injected into the fluidized bed 11 via the one or more steam supply conduit(s) 14. The reduced solids are withdrawn from the fluidized bed 11 via a discharge conduit 16.

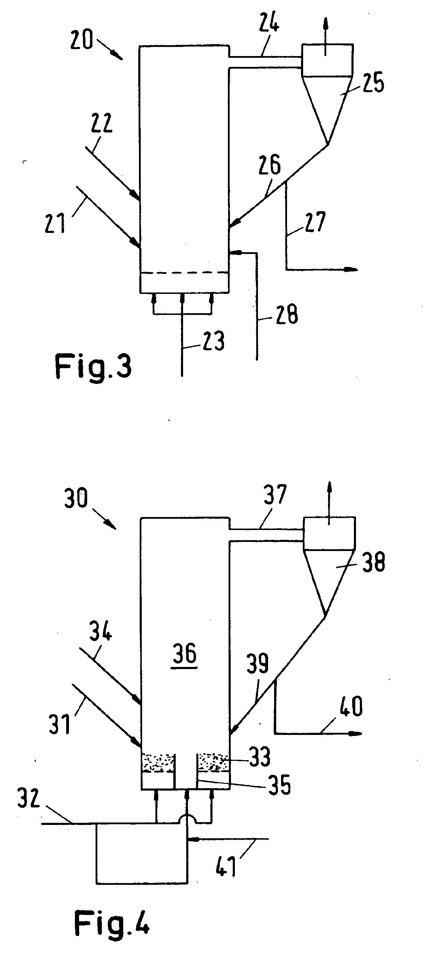

In the third embodiment of the present invention as shown in Fig. 3, a circulating fluidized bed is provided. To a reduction reactor 20, fine-grained solids containing iron oxide, in particular ilmenite, are supplied via a solids supply conduit 21, and a suitable reducing agent, in particular coal, is supplied via a supply conduit 22. The solids are fluidized by supplying a fluidizing gas, which is supplied via a gas supply conduit 23. The fluidized and reduced solids are discharged from the reduction reactor 20 via a passage 24 and separated from the fluidizing gas in a separator 25, in particular a cyclone. The separated solids are at least partly recirculated to the reduction reactor 20 via a return conduit 26. The rest is withdrawn via a discharge conduit 27. Via at least one steam supply conduit 28, steam is injected into the reduction reactor 20. Alternatively, the steam can also be supplied wholly or in part via the supply conduit 23.

In the fourth embodiment of the present invention as shown in Fig. 4, an annular fluidized bed is formed in a reduction reactor 30, as described in detail for instance in DE 102 60 733 A1. Via a solids supply conduit 31, fine-grained solids containing iron oxide, in particular ilmenite, are introduced into the reduction reactor 30 and fluidized by means of fluidizing gas, which is supplied via a gas supply conduit 32, such that they form a stationary fluidized bed 33. In addition, a suitable reducing agent, in particular coal, is introduced into the stationary fluidized bed 33 via a supply conduit 34. In its lower region, the reduction reactor 30 includes a vertical, preferably central gas supply tube 35, which is annularly surrounded by the stationary fluidized bed 33. Through the central tube 35, a stream of gas is supplied, which upon passing through the upper orifice region of the central tube 35 entrains solids from the upper edge of the stationary fluidized bed 33 into a turbulence mixing chamber 36 formed above the stationary fluidized bed 33 and the central tube 35. Due to the banking of the fluidized bed in the annular fluidized bed with respect to the upper edge of the central tube 35, the fluidized solids flow over this edge to the central tube 35, whereby an intensively mixed suspension is formed. Due to the reduction of the flow velocity by the expansion of the gas jet and/or by impingement on one of the reactor walls, the entrained solids quickly lose velocity and fall back into the annular fluidized bed 33. Only a small part of non-precipitated solids is discharged from the reduction reactor 30 together with the stream of gas via a passage 37. Thus, between the reactor regions of the stationary annular fluidized bed 33 and the turbulence mixing chamber 36, a circular solids flow is obtained, which ensures a good heat transfer. Solids separated in the separator 38, in particular a cyclone, are recirculated to the reduction reactor 30 via the return conduit 39, whereas the still hot waste gas is discharged and utilized in some other way. A product stream of reduced solids is withdrawn from the process via a discharge conduit 40 after the cyclone 38 or at some other suitable point. A steam supply conduit 41 opens into the central gas supply conduit 35, so that additional steam together with the gas is introduced into the reduction reactor 30 through the central tube 35. Alternatively, it is possible to inject the additional steam into the annular fluidized bed 33 or into the turbulence mixing chamber 36. In accordance with the invention it is also possible to separate the gas supply to the central tube 35 from the fluidising gas 32 and have an own gas supply e.g. from an external source.

In principle, all possible fluidizing gases or reaction gases can be used for the fluidized beds. For instance, air, technical oxygen, inert gases (such as nitrogen), recycle gases of various compositions (which contain e.g. CO, CO₂, H₂ or water) and any mixtures of said gases with each other and with water or steam can be used.

In all plants described above for performing the process of the invention, the fine-grained solids containing iron oxide, e.g. titanium-containing iron ores, such as ilmenite, are introduced into the respective reduction reactor together with a carbonaceous reducing agent such as coal. In principle, other reducing agents can also be used, which together with water form hydrogen. Via the steam supply conduit, additional steam is introduced into the reactor with a temperature of about 130°C and an excess pressure of 0 to 5 bar (at an absolute pressure of usually 1 to 6 bar). The same forms hydrogen (H₂), which together with the reduction gases CO and H₂ formed from coal can be utilized for reducing the iron ores. As a result, the chemical reactions take place at a lower temperature and with a higher velocity, so that the retention time can be reduced with the plant size remaining the same. At the same time, the temperature in the reactor can be reduced by 50 to 150°C as compared to conventional plants, which leads to a distinct saving of energy. Existing plants can easily be retrofitted for utilizing the process of the invention by providing a corresponding steam supply conduit. In the case of new plants, a smaller reactor can be used with the same throughput.

Usually, the maximum temperature of the bed in the rotary kiln is about 1050 to 1150°C, the temperature of the gas space above the bed maximally is 1200 to 1250°C. Therefore, it is necessary that coals which are used for the reduction have an ash softening temperature of 50°C above the maximum temperature, in order to avoid accretions in the rotary kiln. Many Australian coals (e.g. Collie coal) have ash melting points above 1300°C and so far can be used for the rotary kiln process. Since the possible reduction temperature in the reactor only is about 900 to 1000°C due to the addition of steam, coals with lower ash softening temperatures can also be used, which so far could not be used due to the higher temperature of 1000 to 1150°C, e.g. Indonesian coals.

### Example:

In a rotary kiln, fine-grained titanium-containing and iron-containing ore is charged together with coal. Due to the operating conditions of the rotary kiln, a metallization of iron of 81 % occurs at the end of the rotary kiln.

By adding 250 kg/h of steam with an absolute pressure of 2 bar at five feeding points distributed along the rotary tube (starting with a furnace temperature of about 500°C), metallizations of iron of 92% are achieved as a result of the changed operating conditions with the same feedstock.

When increasing the supplied quantity of ore and coal by 20 to 25%, metallizations of the iron of about 80% can likewise be achieved when adding 250 kg/h of steam with an absolute pressure of 2 bar at five feeding points distributed along the rotary tube. The output of the rotary kiln thus could be increased by 20 to 25% with minimum effort.

### List of Reference Numerals:

- 1: rotary kiln
- 2: solids supply conduit
- 3: supply conduit
- 4: material bed
- 5: discharge conduit
- 6: steam supply conduits
- 7: gas supply conduits
- 8: waste gas conduit

- 10: reduction reactor
- 11: stationary fluidized bed
- 12: solids supply conduit
- 13: supply conduit
- 14: gas supply conduit
- 15: steam supply conduit
- 16: discharge conduit

- 20: reduction reactor
- 21: solids supply conduit
- 22: supply conduit
- 23: gas supply conduit
- 24: passage
- 25: separator
- 26: return conduit
- 27: discharge conduit
- 28: steam supply conduit
- 30: reduction reactor
- 31: solids supply conduit
- 32: gas supply conduit
- 33: stationary annular fluidized bed
- 34: supply conduit
- 35: central tube (gas supply tube)
- 36: turbulence mixing chamber
- 37: passage
- 38: separator
- 39: return conduit
- 40: discharge conduit
- 41: steam supply conduit

## Claims

1. A process for reducing solids containing iron oxide, in particular titanium-containing ores, such as ilmenite, wherein the solids are introduced into a reactor, wherein a carbonaceous reducing agent is introduced into the reactor, wherein the reduction of the solids in the furnace is effected at a temperature of 800 to 1200°C and wherein steam is introduced into the reactor **characterized in that** the steam is introduced into the reactor with a pressure of 1 to 5 bar, preferably 1 to 2 bar, above the internal pressure of the reactor.

2. The process according to claim 1, **characterized in that** the carbonaceous reducing agent is a solid carbonaceous reducing agent.

3. The process according to claim 1, **characterized in that** the steam is introduced into the reactor with a temperature of 100 to 150°C, preferably 120 to 140°C.

4. The process according to any of the preceding claims, **characterized in that** the bulk of solids in the reactor is a moving bulk, preferably being moved with external forces.

5. The process according to any of the preceding claims, **characterized in that** the reactor is a rotary kiln, which is traversed by the solids in a material bed, and that the steam is introduced into the material bed.

6. The process according to any of claims 1 to 4, **characterized in that** the reactor includes a stationary fluidized bed and that the steam is introduced into the fluidized bed.

7. The process according to any of claims 1 to 4, **characterized in that** the solids introduced into the reactor are fluidized by supplying a fluidizing gas, that the reduced solids are discharged from the reactor with the fluidizing gas and separated from the fluidizing gas in a separating means, and that the separated solids are at least partly recirculated to the reactor.

8. The process according to any of claims 1 to 4, **characterized in that** a first gas or gas mixture is introduced into a turbulence mixing chamber of the reactor from below through at least one gas supply tube, wherein the gas supply tube is at least partly surrounded by a stationary annular fluidized bed which is fluidized by supplying fluidizing gas, and that the steam is introduced into the gas supply tube.

9. The process according to any of the preceding claims, **characterized in that** the steam is introduced into the reactor at several points.

10. A plant for reducing solids containing iron oxide, in particular for performing a process according to any of the preceding claims, comprising a reactor (1, 10, 20, 30) in which the solids containing iron oxide are reduced in the presence of a carbonaceous reducing agent at a temperature of 800 to 1200°C, **characterized by** at least one steam supply conduit (4, 15, 28, 41) for introducing steam with a pressure of 1 to 5 bar, preferably 1 to 2 bar, above the internal pressure of the react into the reactor (1, 10, 20, 30).

11. The plant according to claim 10 , **characterized in that** the reactor is a rotary kiln (1) in which the solids form a material bed (4), and that the steam supply conduit (7) opens into the material bed (4).

12. The plant according to claim 10 or 11, **characterized in that** a plurality of steam supply conduits (7) are provided, which are distributed along the length of the furnace.

13. The plant according to claim 10, **characterized in that** the reactor (10) includes a stationary fluidized bed (11) and that the steam supply conduit (15) opens into the fluidized bed (11).

14. The plant according to claim 10, **characterized in that** the reactor is a fluidized-bed reactor (20, 30) in which the solids containing iron oxide are fluidized by supplying fluidizing gas, that subsequent to the reactor (20, 30) a separating device (25, 38) is provided for separating the solids from the fluidizing gas, that the separating device (25, 38) is connected with the fluidized-bed reactor (20, 30) via a return conduit (26, 39), in order to at least partly recirculate the solids separated from the fluidizing gas into the fluidized-bed reactor (20, 30), and that the steam supply conduit (28, 41) opens into the fluidized-bed reactor (20, 30).

15. The plant according to claim 10 or 14, **characterized in that** the reactor (30) includes at least one gas supply tube (35) which in the lower region of the reactor (30) extends substantially vertically upwards into a turbulence mixing chamber (36) and is surrounded by a stationary annular fluidized bed (33) which at least partly is annularly formed around the gas supply tube (35), and that the steam supply conduit (41) opens into the gas supply tube (35).

## Patentansprüche

1. Ein Verfahren zur Reduktion von eisenoxidhaltigen Feststoffen, insbesondere von titanhaltigen Eisenerzen, wie Ilmenit, wobei die Feststoffe in einen Reaktor eingebracht werden, wobei in den Reaktor ein kohlenstoffhaltiges Reduktionsmittel eingebracht wird, wobei die Reduktion der Feststoffe in dem Ofen bei einer Temperatur von 800 bis 1200 °C erfolgt und wobei Dampf in den Reaktor eingebracht wird, **dadurch gekennzeichnet, dass** der Dampf in den Reaktor mit einem Druck von 1 bis 5 bar, vorzugsweise 1 bis 2 bar, oberhalb des Innendruckes des Reaktors eingebracht wird.

2. Das Verfahren nach Anspruch 1, **dadurch gekennzeichnet, dass** das kohlenstoffhaltige Reduktionsmittel ein festes kohlenstoffhaltiges Reduktionsmittel ist.

3. Das Verfahren nach Anspruch 1, **dadurch gekennzeichnet, dass** der Dampf mit einer Temperatur von 100 bis 150 °C, vorzugsweise 120 bis 140 °C, in den Reaktor eingebracht wird.

4. Das Verfahren nach einem der vorhergehenden Ansprüche, **dadurch gekennzeichnet, dass** das Bett der Feststoffe im Reaktor ein Wanderbett ist, das vorzugsweise durch äußere Kräfte bewegt wird.

5. Das Verfahren nach einem der vorhergehenden Ansprüche, **dadurch gekennzeichnet, dass** der Reaktor ein Drehrohrofen ist, welchen die Feststoffe in einer Materialschüttung durchlaufen, und dass der Dampf in die Materialschüttung eingebracht wird.

6. Das Verfahren nach einem der Ansprüche 1 bis 4, **dadurch gekennzeichnet, dass** der Reaktor eine stationäre Wirbelschicht aufweist und dass der Dampf in die Wirbelschicht eingebracht wird.

7. Das Verfahren nach einem der Ansprüche 1 bis 4, **dadurch gekennzeichnet, dass** die in den Reaktor eingebrachten Feststoffe durch Zufuhr eines Fluidisierungsgases fluidisiert werden, dass die reduzierten Feststoffe mit dem Fluidisierungsgas aus dem Reaktor ausgetragen und in einer Abscheideeinrichtung von dem Fluidisierungsgas getrennt werden, und dass die abgetrennten Feststoffe wenigstens teilweise in den Reaktor zurückgeführt werden.

8. Das Verfahren nach einem der Ansprüche 1 bis 4, **dadurch gekennzeichnet, dass** ein erstes Gas oder Gasgemisch von unten durch wenigstens ein Gaszufuhrrohr in eine Turbulenzmischkammer des Reaktors eingeführt wird, wobei das Gaszufuhrrohr wenigstens teilweise von einer durch Zufuhr von Fluidisierungsgas fluidisierten stationären Ringwirbelschicht umgeben wird, und dass der Dampf in das Gaszufuhrrohr eingebracht wird.

9. Das Verfahren nach einem der vorhergehenden Ansprüche, **dadurch gekennzeichnet, dass** der Wasserdampf an mehreren Stellen in den Reaktor eingebracht wird.

10. Eine Anlage zur Reduktion von eisenoxidhaltigen Feststoffen, insbesondere zur Durchführung eines Verfahrens nach einem der vorhergehenden Ansprüche, mit einem Reaktor (1, 10, 20, 30), in welchem die eisenoxidhaltigen Feststoffe in Gegenwart eines kohlenstoffhaltigen Reduktionsmittels bei einer Temperatur von 800 bis 1200 °C reduziert werden, **gekennzeichnet durch** wenigstens eine Dampfzufuhrleitung (4, 15, 28, 41) zur Einbringung von Dampf mit einem Druck von 1 bis 5 bar, vorzugsweise 1 bis 2 bar, oberhalb des Innendruckes des Reaktors (1, 10, 20, 30).

11. Die Anlage nach Anspruch 10, **dadurch gekennzeichnet, dass** der Reaktor ein Drehrohrofen (1) ist, in welchem die Feststoffe eine Materialschüttung (4) bilden, und dass die Dampfzufuhrleitung (7) in die Materialschüttung (4) mündet.

12. Die Anlage nach Anspruch 10 oder 11, **dadurch gekennzeichnet, dass** mehrere über die Ofenlänge verteilt angeordnete Dampfzufuhrleitungen (7) vorgesehen sind.

13. Die Anlage nach Anspruch 10, **dadurch gekennzeichnet, dass** der Reaktor (10) eine stationäre Wirbelschicht (11) aufweist und dass die Dampfzufuhrleitung (15) in die Wirbelschicht (11) mündet.

14. Die Anlage nach Anspruch 10, **dadurch gekennzeichnet, dass** der Reaktor ein Wirbelschichtreaktor (20, 30) ist, in welchem die eisenoxidhaltigen Feststoffe durch Zufuhr von Fluidisierungsgas fluidisiert werden, dass im Anschluss an den Reaktor (20, 30) eine Abscheidevorrichtung (25, 38) zur Trennung der Feststoffe von dem Fluidisierungsgas vorgesehen ist, dass die Abscheidevorrichtung (25, 38) über eine Rückführleitung (26, 39) mit dem Wirbelschichtreaktor (20, 30) verbunden ist, um die von dem Fluidisierungsgas getrennten Feststoffe wenigstens teilweise wieder in den Wirbelschichtreaktor (20, 30) zurückzuführen, und dass die Dampfzufuhrleitung (28, 41) in den Wirbelschichtreaktor (20, 30) mündet.

15. Die Anlage nach Anspruch 10 oder 14, **dadurch gekennzeichnet, dass** der Reaktor (30) wenigstens ein sich im unteren Bereich des Reaktors (30) im Wesentlichen vertikal nach oben bis in eine Turbulenzmischkammer (36) erstreckendes Gaszufuhrrohr (35) aufweist, welches von einer wenigstens teilweise ringförmig um das Zufuhrrohr (35) ausgebildeten stationären Ringwirbelschicht (33) umgeben ist, und dass die Dampfzufuhrleitung (41) in das Gaszufuhrrohr (35) mündet.

## Revendications

1. Procédé pour réduire des matières solides contenant de l'oxyde de fer, en particulier des minerais contenant du titane, tels que la liménite, dans lequel les matières solides sont introduites dans un réacteur, dans lequel un agent réducteur carboné est introduit dans le réacteur, dans lequel la réduction des matières solides dans le four est effectuée à une température allant de 800 à 1200 °C et dans lequel de la vapeur est introduite dans le réacteur, **caractérisé en ce que** la vapeur est introduite dans le réacteur à une pression allant de 1 à 5 bar, de préférence de 1 à 2 bar, supérieure à la pression interne du réacteur.

2. Procédé selon la revendication 1, **caractérisé en ce que** l'agent réducteur carboné est un agent réducteur carboné solide.

3. Procédé selon la revendication 1, **caractérisé en ce que** la vapeur est introduite dans le réacteur à une température allant de 100 à 150 °C, de préférence de 120 à 140 °C.

4. Procédé selon l'une quelconque des revendications précédentes, **caractérisé en ce que** les matières solides en vrac dans le réacteur sont transportées en vrac, de préférence étant transportées à l'aide de forces externes.

5. Procédé selon l'une quelconque des revendications précédentes, **caractérisé en ce que** le réacteur est un four rotatif, qui est traversé par les matières solides dans un lit matériel, et que la vapeur est introduite dans le lit matériel.

6. Procédé selon l'une quelconque des revendications 1 à 4, **caractérisé en ce que** le réacteur inclut un lit fluidisé stationnaire et que la vapeur est introduite dans le lit fluidisé.

7. Procédé selon l'une quelconque des revendications 1 à 4, **caractérisé en ce que** les matières solides introduites dans le réacteur sont fluidisées en fournissant un gaz fluidisant, que les matières solides réduites sont déchargées du réacteur à l'aide du gaz fluidisant et séparées du gaz fluidisant par un moyen de séparation, et que les matières solides séparées sont au moins partiellement recirculées dans le réacteur.

8. Procédé selon l'une quelconque des revendications 1 à 4, **caractérisé en ce qu'**un premier gaz ou un mélange de gaz est introduit dans la chambre de mélange de turbulences du réacteur introduit depuis le bas à travers au moins un tube d'alimentation en gaz, dans lequel le tube d'alimentation en gaz est au moins partiellement entouré par un lit fluidisé annulaire stationnaire qui est fluidisé en fournissant le gaz fluidisant, et que la vapeur est introduite dans le tube d'alimentation en gaz.

9. Procédé selon l'une quelconque des revendications précédentes, **caractérisé en ce que** la vapeur est introduite dans le réacteur à plusieurs endroits.

10. Installation pour réduire les matières solides contenant de l'oxyde de fer, en particulier pour effectuer un procédé selon l'une quelconque des revendications précédentes, comprenant un réacteur (1, 10, 20, 30) dans lequel les matières solides contenant de l'oxyde de fer sont réduites en présence d'un agent réducteur carboné à une température allant de 800 à 1200 °C, **caractérisée en ce qu'**au moins un conduit d'alimentation de vapeur (4, 15, 28, 41) pour introduire la vapeur à une pression allant de 1 à 5 bar, de préférence de 1 à 2 bar, supérieure à la pression interne de réaction dans le réacteur (1, 10, 20, 30).

11. Installation selon la revendication 10, **caractérisée en ce que** le réacteur est un four rotatif (1) dans lequel les matières solides forment un lit matériel (4), et que le conduit d'alimentation de vapeur (7) s'ouvre dans le lit matériel (4).

12. Installation selon la revendication 10 ou la revendication 11, **caractérisée en ce qu'**une pluralité de conduits d'alimentation de vapeur (7) sont fournis, qui sont répartis le long de la longueur du four.

13. Installation selon la revendication 10, **caractérisée en ce que** le réacteur (10) inclut un lit fluidisé stationnaire (11) et que le conduit d'alimentation de vapeur (15) s'ouvre dans le lit fluidisé (11).

14. Installation selon la revendication 10, **caractérisée en ce que** le réacteur est un réacteur à lit fluidisé (20, 30) dans lequel les matières solides contenant de l'oxyde de fer sont fluidisées en fournissant un gaz fluidisant, que subséquent au réacteur (20, 30) un dispositif de séparation (25, 38) est fournis pour séparer les matières solides du gaz fluidisant, que le dispositif de séparation (25, 38) est connecté avec le réacteur à lit fluidisé (20, 30) par l'intermédiaire d'un conduit de retour (26, 39), de façon à au moins partiellement recirculer les matières solides séparées du gaz fluidisant dans le réacteur à lit fluidisé (20, 30), et que le conduit d'alimentation de vapeur (28, 41) s'ouvre dans le réacteur à lit fluidisé (20, 30).

15. Installation selon la revendication 10 ou la revendication 14, **caractérisée en ce que** le réacteur (30) inclut au moins un tube d'alimentation en gaz (35) qui dans la région basse du réacteur (30) s'étend essentiellement verticalement vers le haut dans une chambre de mélange de turbulences (36) et est entouré par un lit fluidisé annulaire stationnaire (33) qui au moins partiellement est formé de façon annulaire autour du tube d'alimentation en gaz (35), et que le conduit d'alimentation de vapeur (41) s'ouvre dans le tube d'alimentation en gaz (35).
